# EUROPÄISCHE PATENTSCHRIFT

(11) **EP 0 705 353 B1**
(45) Veröffentlichungstag und Bekanntmachung des Hinweises auf die Patenterteilung: **09.04.1997**
(21) Anmeldenummer: 95904341.5
(22) Anmeldetag: 16.06.1994
(51) Int. Cl.: D03J 1/00

(54) **VORRICHTUNG ZUM EINLEGEN UND ENTNEHMEN VON HALBKETTBÄUMEN**
DEVICE FOR FITTING AND REMOVING HALF-LOOM BEAMS
DISPOSITIF PERMETTANT DE METTRE EN PLACE ET D'ENLEVER DES SEMI-ENSOUPLES DE CHAINE

(30) Priorität: 25.06.1993 DE 4321141; 07.08.1993 DE 4326606
(43) Veröffentlichungstag der Anmeldung: 10.04.1996
(73) Patentinhaber: Genkinger Hebe- und Fördertechnik GmbH, D-72525 Münsingen (DE)
(72) Erfinder: Graser, Helmut, D-72585 Riederich (DE)
(74) Vertreter: Wolf, Eckhard, Dr.-Ing.
(86) Internationale Anmeldenummer: EP9401957
(87) Internationale Veröffentlichungsnummer: WO9500688

(56) Entgegenhaltungen:
- DE-A- 2 853 907
- DE-A- 4 128 969
- DE-B- 1 535 923
- DE-C- 3 317 604

## Beschreibung

Die Erfindung betrifft eine Vorrichtung zum Einlegen und Entnehmen von Halbkettbäumen in ein bzw. aus einem Kettbaumlager einer Webmaschine mittels eines mindestens zwei Tragarme aufweisenden Kettbaumhub- und transportwagens, wobei die Halbkettbäume an ihrem einen stirnseitigen Ende eine Festscheibe und einen auf der Außenseite der Festscheibe axial überstehenden und starr mit dieser verbundenen Laufring tragen und das Kettbaumlager eine durch eine Randöffnung radial seitlich und/oder von oben her für die auf den Tragarmen befindlichen Halbkettbäume zugängliche, durch einen vorzugsweise schwenkbaren Lagerdeckel verschließbare Lagerschale zur paarweisen Aufnahme der einander zugewandten Laufringe zweier Halbkettbäume aufweist.

Bei einer bekannten Vorrichtung dieser Art (DE-C-3317604) ist ein Kettbaumhub- und transportwagen mit einem Mitteltragarm vorgesehen, der gegen die einander benachbarten Festscheiben der Halbkettbäume anlegbare Stützglieder sowie einen die Laufringe untergreifenden Traghaken aufweist. Der Traghaken ist gegenüber der die Laufringe aufnehmenden Lagerschale der Webmaschine fixierbar und am Mitteltragarm senkrecht zur Längserstreckung des Hub- und Transportwagens verschiebbar angeordnet. Die Fixierung des Traghakens erfolgt, durch eine an seiner Unterseite angeordnete Nase, die beim durch Verschwenken des Mitteltragarms erfolgten Absenken des Traghakens in eine Aussparung der verlängerten Lagerschale der Webmaschine einrastet. Mit dem Kettbaumhub- und transportwagen wird beim Einlegen also zunächst die Fixierungsposition des Mitteltragarms außerhalb der Lagerschale angefahren. Von dort aus werden die Halbkettbäume über einen Spindeltrieb am Mitteltragarm mit Hilfe der Stützglieder aus dem Traghaken herausgeschoben, bis sie über die Traghakenkante hinweg in die Lagerschale fallen. Wegen der hohen Kettbaummasse kommt es hierbei zu erheblichen mechanischen Belastungen des Kettbaums und des Kettbaumlagers. Die Entnahme der Halbkettbäume aus der Webmaschine ist mit der bekannten Vorrichtung allenfalls unter Zuhilfenahme von Hebeeisen möglich, mit denen die Halbkettbäume zunächst auf die Traghaken über deren Kante hinweg zu praktizieren sind. Wegen der räumlich beengten Verhältnisse im Bereich des Mittellagers zwischen den beiden Halbkettbäumen ist eine paarweise Entnahme der Halbkettbäume mit eingezogener Kette jedoch nicht möglich. In diesem Falle müssen die Kettfäden abgeschnitten und die Kettbäume einzeln, beispielsweise mit Hilfe eines Muldenwagens, entfernt werden.

Ausgehend hiervon liegt der Erfindung die Aufgabe zugrunde, eine Vorrichtung der eingangs angegebenen Art zu entwickeln, die es ermöglicht, Halbkettbäume sowohl einzeln als auch paarweise, gegebenenfalls mit eingezogenen Kettfäden, einfach und zügig in das Kettbaumlager der Webmaschine einzulegen und aus diesem zu entnehmen.

Zur Lösung dieser Aufgabe werden die in den Patentansprüchen 1 und 2 angegebenen Merkmalskombinationen vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, die Halbkettbäume in der Nähe ihres Laufrings so zu unterfassen, daß sie unmittelbar in der Lagerschale kollisionsfrei abgesetzt und aus dieser ausgehoben werden können. Um dies zu ermöglichen, wird gemäß der Erfindung vorgeschlagen, daß in einem bei eingelegten Halbkettbäumen axial über die Lagerschale überstehenden Bereich zwischen Laufring und Festscheibe der Halbkettbäume jeweils eine zum Laufring koaxiale Stützfläche angeordnet ist, und daß zumindest einer der Tragarme mindestens eine stirnseitige, an der Lagerschale vorbei von unten her an der Stützfläche abstützbare Tragklaue aufweist. Als Alternative hierzu wird vorgeschlagen, daß der Tragarm eine bis in die Nähe der Lagerschale reichende, mindestens einen der Laufringe teilweise in Umfangsrichtung umfassende Tragmulde sowie mindestens eine axial gegenüber der Tragmulde versetzte, an dem benachbarten Laufring vorbei von oben her gegen die Stützfläche unter Andrücken des Laufrings gegen die Tragmulde verschieb- oder verschwenkbare Tragklaue aufweist.

Die Stützfläche ist dabei zweckmäßig unter Bildung einer Umfangsnut seitlich an ihren Flanken durch den Laufring einerseits und die Festscheibe andererseits begrenzt, wobei der Nutengrund durch einen mit dem Laufring vorzugsweise einstückig verbundenen koaxialen Stufenansatz gebildet sein kann.

Um die Halbkettbäume paarweise entnehmen zu können, wird gemäß einer bevorzugten Ausgestaltung der Erfindung vorgeschlagen, daß einer der Tragarme, vorzugsweise ein Mitteltragarm, zwei mindestens im Abstand der Querabmessung der Lagerschale oder der beiden Lagerringe voneinander angeordnete, an den Stützflächen der beiden Halbkettbäume abstützbare, vorzugsweise in je eine dort befindliche Umfangsnut einführbare Tragklauen aufweist. Die Tragklauen sind hier also gabelartig am Mitteltragarm angeordnet, so daß sie beim Einlege- und Entnahmevorgang einen relativ flach ausgebildeten, die Lagerschale enthaltenden Lagerausleger an seinen Breitseiten bis zur Lagerschale hin übergreifen können.

Die beiden Tragklauen sind vorzugsweise an einem gemeinsamen Mitteltragarm starr angeordnet. Im Falle der von oben gegen die Stützflächen heranführbaren Tragklauen ist es jedoch von Vorteil, wenn die Tragklauen an einem gemeinsamen, am Tragarm angelenkten Schwenkarm stirnseitig überstehen. Die Tragklauen können hierbei mittels eines am Tragarm angeordneten, vorzugsweise als kurbelgetriebene Gewindestange ausgebildeten Getriebeelements gegenüber dem Tragarm begrenzt verschwenkt werden.

Weiter ist es möglich, daß der Tragarm zwei längsgeteilte, getrennt bewegbare und miteinander kuppelbare, je eine der Tragklauen aufweisende Tragarmhälften aufweist. Dabei können die Tragarmhälften auf einer gemeinsamen Hubwelle angeordnet sein, wobei mindestens eine der beiden Tragarmhälften unabhängig von der anderen mit der Hubwelle kuppelbar und von dieser entkuppelbar ist. Es ist jedoch auch möglich, zwei getrennt betätigbare Hubwellen an der Hub- und Transportvorrichtung vorzusehen, die je eine der Tragarmhälften tragen und die wahlweise miteinander kuppelbar sind. Die beiden Tragarmhälften sind über die Hubwelle bzw. Hubwellen mit den zugehörigen Außentragarmen starr gekoppelt. Diese Maßnahmen ermöglichen es, die Halbkettbäume einzeln, beispielsweise vom Fußboden aufzunehmen und einzeln oder gemeinsam in das Kettbaumlager der Webmaschine einzulegen. Weiter ist damit auch das paarweise Einlegen von Halbkettbäumen mit eingezogenen Kettfäden möglich.

Um eine berührungsfreie Führung der Halbkettbäume im Mittellager zu gewährleisten, wird gemäß einer vorteilhaften Ausgestaltung der Erfindung vorgeschlagen, daß die Stirnseiten des feststehenden Teils der Lagerschale außerhalb des Umfassungsbereichs der Tragklauen mit je einer bei eingelegten Halbkettbäumen in deren Umfangsnut eingreifenden, vorzugsweise im wesentlichen vertikal ausgerichteten Führungsleiste bestückt sind.

Die Querabmessungen der Lagerschale sind mindestens einmal, vorzugsweise etwa doppelt so groß wie die der einzelnen Laufringe. Weiter weisen die Klauen vorteilhafterweise eine der konvexen Krümmung der Stützfläche entsprechende konkave Innenkrümmung auf. Um eine Anpassung an unterschiedliche Abmessungen von Halbkettbäumen zu ermöglichen, sind Tragklauen mit unterschiedlicher Innenkrümmung austauschbar am Tragarm angeordnet.

Eine alternative Ausführungsform der Erfindung sieht vor, daß die Laufringe um einen Teil, vorzugsweise um etwa die Hälfte ihrer Wandstärke seitlich über die Lagerschale überstehen und an ihren überstehenden Umfangsteilen die Stützfläche bilden. Die Laufringe können dabei an ihrem Umfang einen die Lagerschale an ihren Seitenflanken teilweise führend übergreifenden Stufenring bilden oder tragen, dessen eine, über die Lagerschale überstehende, die benachbarte Seitenflanke übergreifende Ringstufe an ihrem Umfang die Stützfläche für die Tragklaue bildet.

Um eine reibungsarme Lagerung der Halbkettbäume auf der Lagerschale und an den Tragklauen zu ermöglichen, können die Laufringe mit einem kugelgelagerten Umfangsring versehen werden.

Im folgenden wird die Erfindung anhand einiger in der Zeichnung in schematischer Weise dargestellter Ausführungsbeispiele näher erläutert. Es zeigen
- Fig. 1: eine Draufsicht auf einen Halbkettbaumhub- und Transportwagen in Einlegeposition;
- Fig. 2: eine vergrößerte ausschnittsweise Seitenansicht des Mitteltragarms des Kettbaumhub- und transportwagens in Einlegeposition;
- Fig. 3: eine ausschnittsweise schaubildliche Darstellung des Mitteltragarms des Kettbaumhub- und transportwagens und des Mittellagers der Webmaschine;
- Fig. 4: eine Draufsicht auf einen Kettbaumhub- und transportwagen mit zweigeteiltem Mitteltragarm bei der Einzelaufnahme von Halbkettbäumen;
- Fig. 5: eine Seitenansicht des Kettbaumhub- und transportwagens nach Fig. 4 im Bereich des zweigeteilten Mitteltragarms;
- Fig. 6: eine Draufsicht auf einen Halbkettbaumhub- und Transportwagen mit zweigeteiltem Mitteltragarm und geteilter Hubwelle;
- Fig. 7: einen Kettbaumhub- und transportwagen für einzelne Halbkettbäume in Einlegeposition in schaubildlicher Darstellung;
- Fig. 8: eine ausschnittsweise schaubildliche Darstellung des Mitteltragarms eines Kettbaumhub- und Transportwagens und eines mit Auflagerollen versehenen Mittellagers der Webmaschine;
- Fig. 9: einen Schnitt durch das Mittellager der Fig. 8 im Bereich der unteren Auflagerollen mit aufgesetzten Halbkettbäumen;
- Fig. 10: einen Schnitt durch das Mittellager entsprechend Fig. 9 für ein abgewandeltes Ausführungsbeispiel;
- Fig. 11: einen Schnitt entsprechend Fig. 9 und 10 für ein weiteres abgewandeltes Ausführungsbeispiel;
- Fig. 12a und b: eine ausschnittsweise Seitenansicht und Draufsicht eines abgewandelten Ausführungsbeispiels eines Mitteltragarms des Kettbaumhub- und Transportwagens in Einlegeposition.

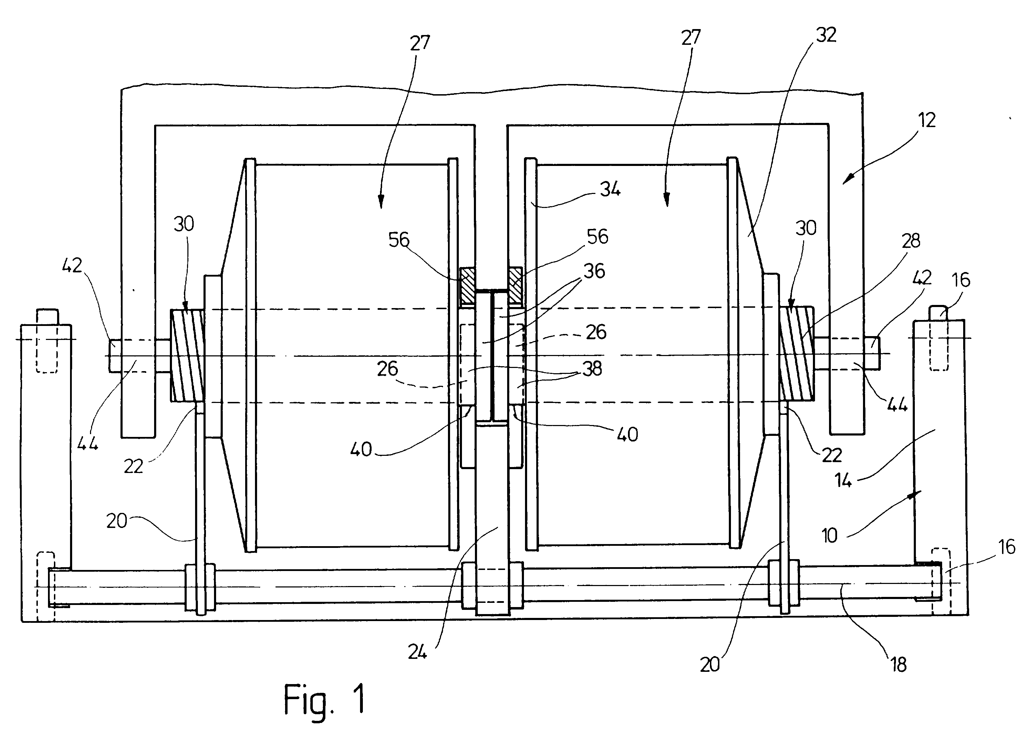

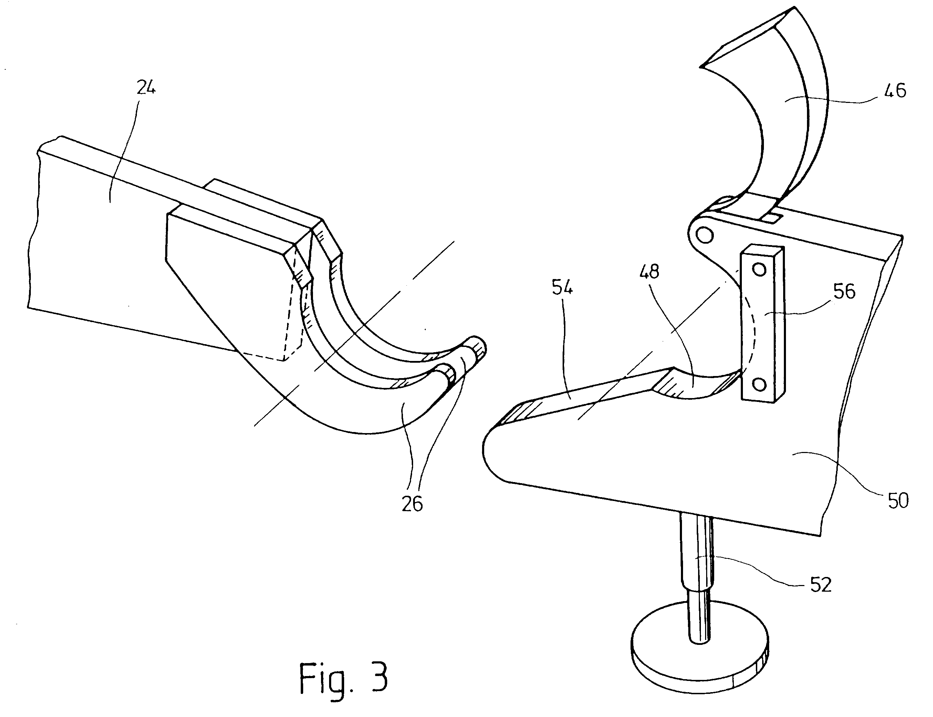

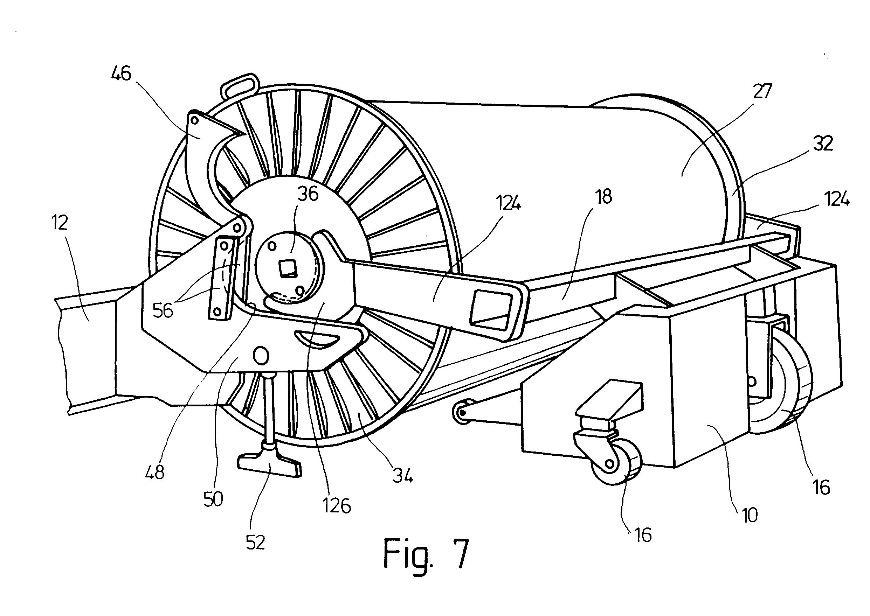

Die in der Zeichnung dargestellten Kettbaumhub- und transportwagen 10 sind für das paarweise (Fig. 1 bis 6, 8 bis 12) oder einzelne (Fig. 7) Einlegen oder Entnehmen von Halbkettbäumen gegebenenfalls mit eingezogenen Kettfäden in eine bzw. aus einer Webmaschine 12 bestimmt.

Der jeweilige Kettbaumhub- und transportwagen besteht zu diesem Zweck aus einem Fahrgestell 14 mit lenkbaren und zum Teil angetriebenen Rädern 16, einer Hubwelle 18 und darauf längsverschiebbaren äußeren Tragarmen 20 mit Rohrgreifern 22 sowie einem Mitteltragarm 24 mit Tragklauen 26. Die Halbkettbäume 27 weisen ein mit einem Außengewinde 28 versehenes Kettbaumrohr 30, eine auf dem Gewinde 28 des Kettbaumrohrs 30 laufende und an diesem festlegbare lose Kettbaumscheibe 32 sowie eine am gegenüberliegenden stirnseitigen Ende des Kettbaumrohrs 30 starr angeordnete Festscheibe 34 auf. Auf der Außenseite der Festscheibe 34 ist ein Laufring 36 mit einem stufenförmigen Ansatz 38 koaxial angeordnet, wodurch eine an ihren Flanken durch die Festscheibe 34 und den Laufring 36 begrenzte Umfangsnut 40 gebildet wird.

Die Halbkettbäume 27 sind mittels Steckbolzen 42 in den Außenlagern 44 und mit ihren Laufringen 36 in einer mittels eines schwenkbaren Lagerdeckels 46 verschließbaren randoffenen Lagerschale 48 an der Webmaschine 10 gelagert. Die Lagerschale 48 befindet sich an einem plattenförmigen maschinenfesten Ausleger 50, der zusätzlich mit einer höhenverstellbaren Stütze 52 auf dem Fußboden abgestützt ist. In die randoffene Seite der Lagerschale 48 mündet eine Auflaufschräge 54.

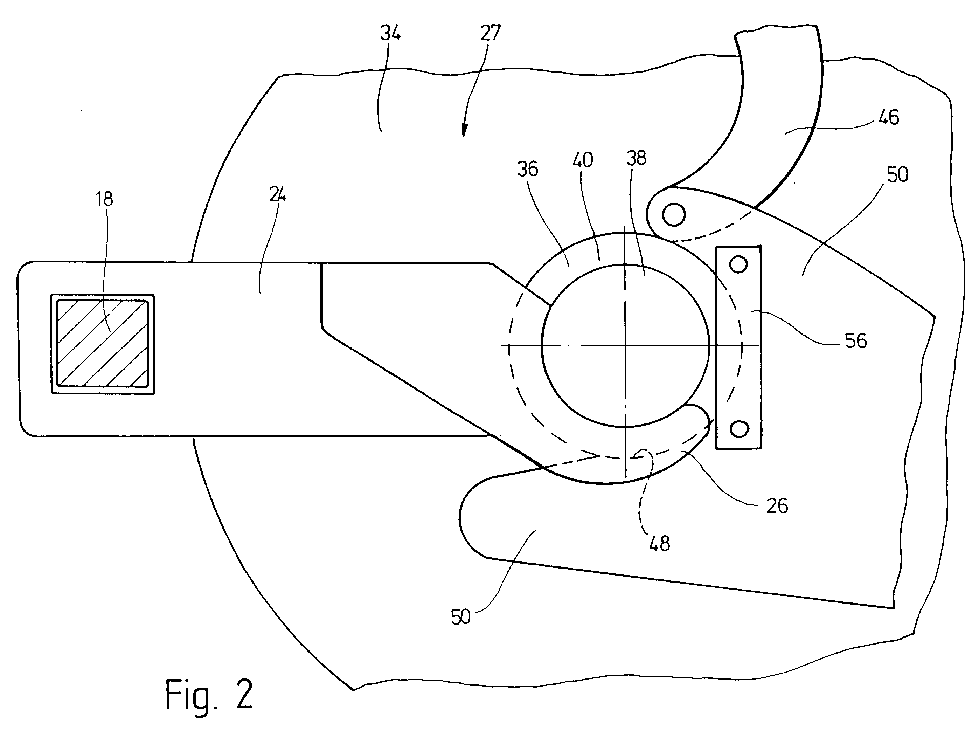

Auf der der Randöffnung gegenüberliegenden Rückseite der Lagerschale 48 sind am Ausleger 50 zwei etwa vertikal ausgerichtete Führungsleisten 56 angeordnet, die die Lagerschale 48 seitlich teilweise so übergreifen, daß sie bei eingelegten Halbkettbäumen 27 in deren Umfangsnuten 40 unter Herstellung eines axialen Formschlusses eingreifen. Die Führungsleisten 56 sind so plaziert, daß die Tragklauen 26 des Mitteltragarms 24 beim Kettbaumwechsel nicht mit ihnen kollidieren (vgl. Fig. 2).

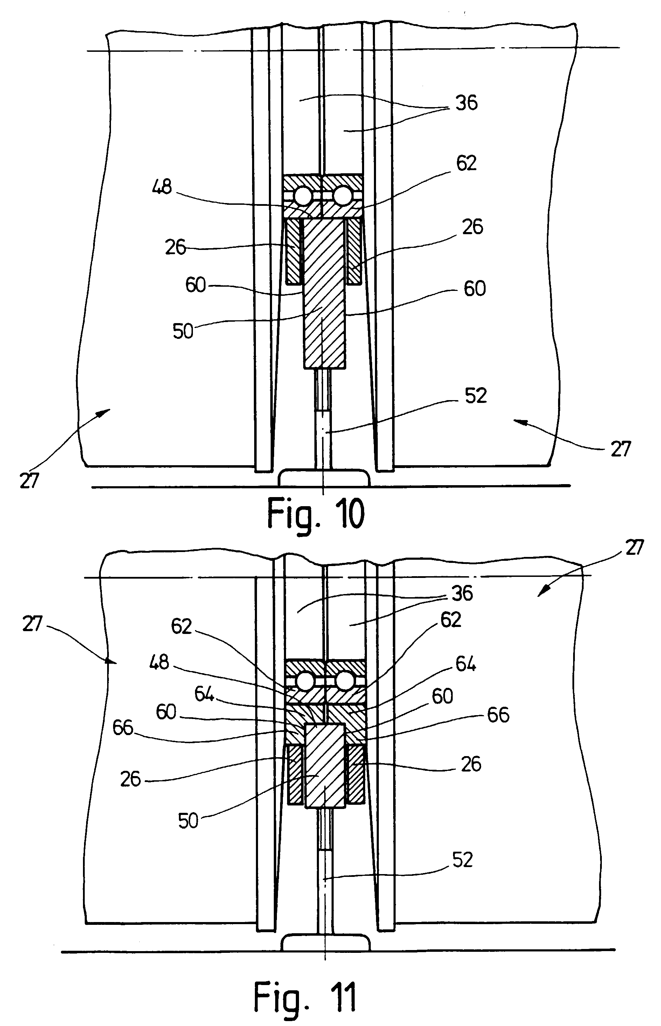

Bei den Ausführungsbeispielen nach Fig. 10 und 11 sind die einander paarweise zugewandten Laufringe 36 der beiden Halbkettbäume 27 in ihrer Gesamtheit breiter als die Lagerschale 48 des maschinenfesten Auslegers 50, so daß im Bereich zwischen den Seitenflanken 60 der Lagerschale 48 und den benachbarten Festscheiben 34 ein freier Zwischenraum für den Eingriff der Tragklauen 26 verbleibt. Um eine reibungsarme Drehung der Halbkettbäume 27 in der Lagerschale 48 und auf den Tragklauen 26 zu ermöglichen, sind die Laufringe 36 bei diesen Ausführungsbeispielen mit kugelgelagerten Umfangsringen 62 versehen. Bei dem Ausführungsbeispiel nach Fig. 11 tragen die Laufringe 36 an ihrem Umfang zusätzlich einen Stufenring 64, dessen über die Lagerschale 48 überstehende Ringstufe 66 die Seitenflanken 60 der Lagerschale 48 unter Bildung einer Seitenführung übergreift und an ihrem Umfang die Stützfläche für die Tragklauen 26 bildet.

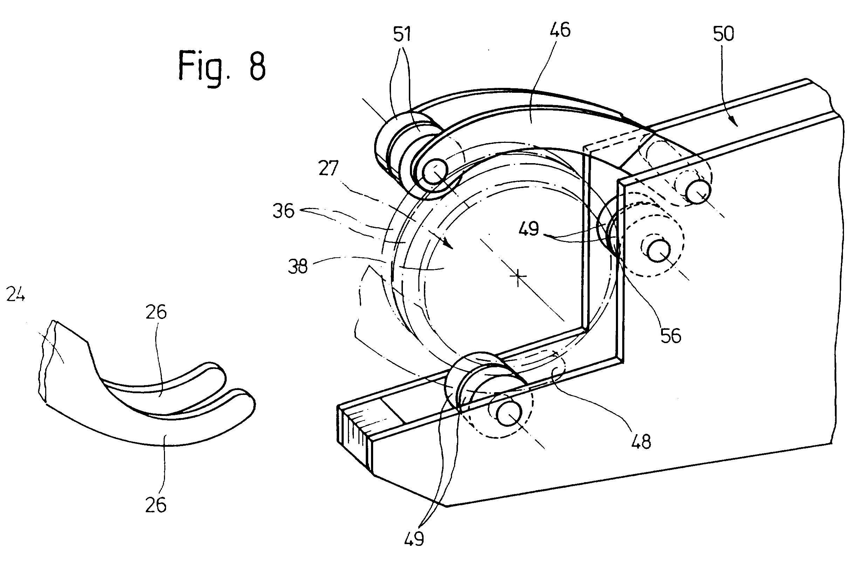

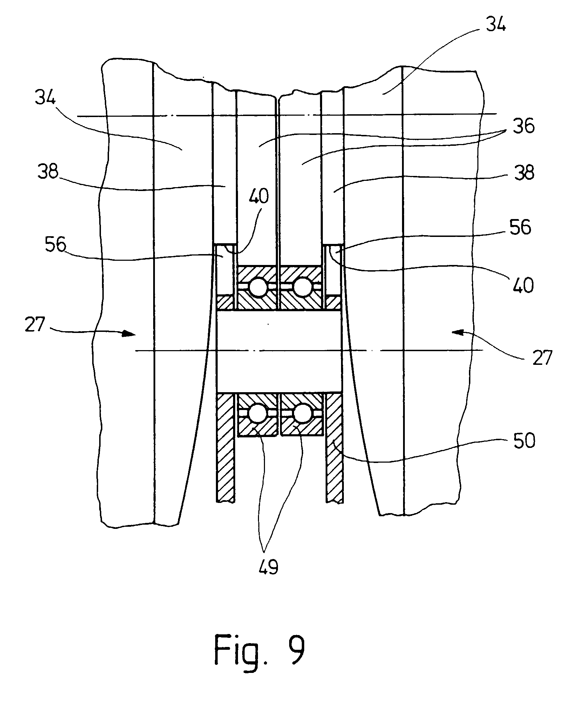

Bei dem in Fig. 8 und 9 gezeigten Ausführungsbeispiel ist der Ausleger 50 im horizontalen und vertikalen Bereich der Lagerschale 48 mit zwei Rollenpaaren 49 bestückt, auf denen sich die einander benachbarten Laufringe 36 der Halbkettbäume 27 so abstützen, daß zwischen der Lagerschalenkante und dem stufenförmigen Ansatz 38 ein Abstand für den Eingriff der Tragklauen 26 verbleibt. Die in die Umfangsnuten 40 eingreifenden Führungsleisten 56 werden dort durch die vertikalen Flanken des Auslegers 50 gebildet. Als Lagerdeckel 46 ist ein am Ausleger 50 angelenkter, mit einem Verschlußrollenpaar 51 gegen den Umfang der Laufringe 36 verschwenkbarer Verschlußhebel vorgesehen.

Bei dem in Fig. 1 bis 3 dargestellten Ausführungsbeispiel sind die Tragklauen 26 an einem gemeinsamen einstückigen Mitteltragarm 24 starr angeordnet, der seinerseits zusammen mit den Außentragarmen 20 auf einer gemeinsamen Vierkant-Hubwelle 18 angeordnet ist. Diese Anordnung eignet sich besonders zum paarweisen Einlegen und Entnehmen der Halbkettbäume 27. Die Halbkettbäume 27 werden hierzu auf der Seite ihrer Laufringe 36 gemeinsam von den Tragklauen 26 des Mitteltragarms 24 erfaßt. Die Tragklauen 26 greifen hierbei mit ihrem konkav gekrümmten Teil in die Umfangsnuten 40 ein und schlagen dort von unten her gegen den Nutengrund 38 an. Die Laufringe 36 befinden sich dabei im freien Zwischenraum zwischen den beiden Tragklauen 26. Zusätzlich werden die Halbkettbäume 27 an den über die Kettbaumscheiben 32 überstehenden Teilen der Kettbaumrohre 30 von den Rohrgreifern 22 an den Tragarmen 20 untergriffen.

Zum Einlegen der Halbkettbäume 27 in die Webmaschine wird der Kettbaumhub- und transportwagen 10 im Kettgang vor der Webmaschine 12 plaziert und parallelisiert und sodann senkrecht in Richtung Webmaschine verfahren, bis die Tragarme 20,24 mit ihren Rohrgreifern 22 und Tragklauen 26 zusammen mit den darauf befindlichen Halbkettbäumen 27 in Lagerposition sind. In dieser Position wird der Lagerausleger 50 im Bereich der Lagerschale 48 von den beiden im Abstand voneinander angeordneten Tragklauen 26 seitlich übergriffen, wie dies beispielsweise aus Fig. 2 zu ersehen ist. Auf diese Weise können die Laufringe 36 der Halbkettbäume 27 unmittelbar in der Lagerschale abgesetzt werden, ohne daß es zu einer Kollision zwischen den Tragklauen 26 und dem Ausleger 50 kommt. Durch geeignete Auflaufschrägen im Bereich der Tragklauen 26 und/oder am Ausleger 50 kann in einem gewissen Maße auch ein selbsttätiger Toleranzausgleich beim Einlegevorgang erfolgen. Nachdem die Halbkettbäume 27 auch im Bereich der Außenlager 44 mit Hilfe der Steckbolzen 42 gesichert sind, können die Tragarme 20, 24 über die Hubwelle 18 abgesenkt und der Kettbaumhubwagen 10 aus seiner Ladeposition herausgefahren werden.

Das Entnehmen der Halbkettbäume erfolgt in umgekehrter Reihenfolge, indem zunächst der Kettbaumhubwagen 10 mit abgesenkten Tragarmen 20,24 in Entnahmeposition verfahren wird, die Tragarme 20,24 sodann mit ihren Rohrgreifern 22 und ihren Tragklauen 26 zur Anlage gegen die überstehenden Rohrteile 30 und den Nutengrund 38 angehoben werden, die Steckbolzen 42 entfernt werden und der Kettbaumhubwagen 10 zusammen mit den aus den Lagerstellen 48,44 ausgehobenen Halbkettbäumen 27 aus dem Lagerbereich der Webmaschine herausgefahren wird.

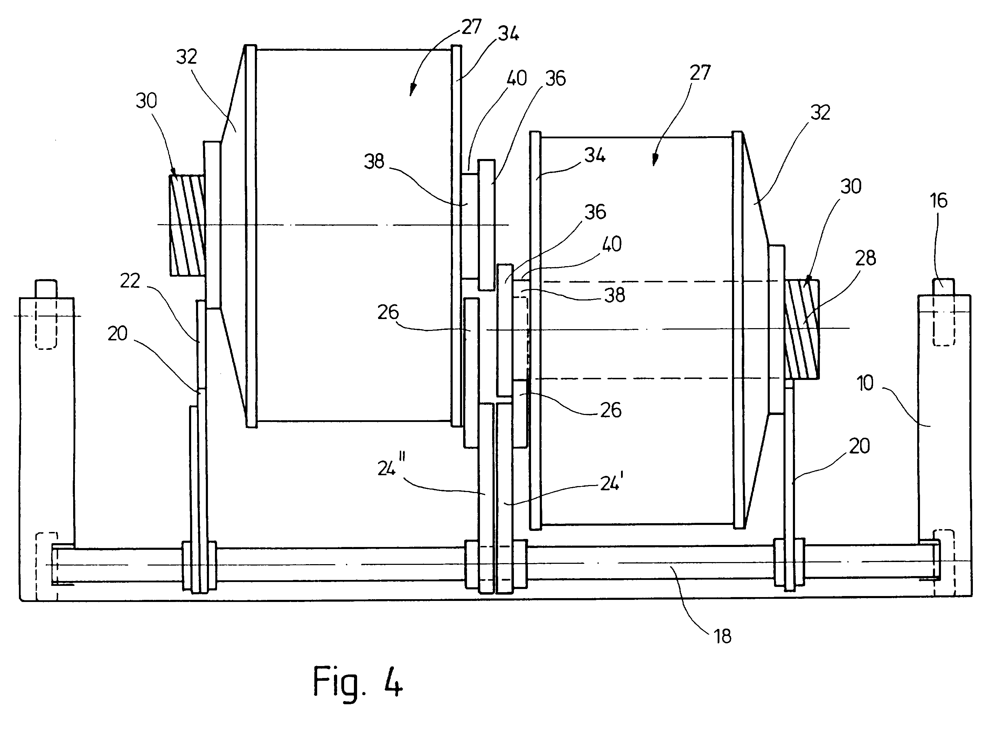

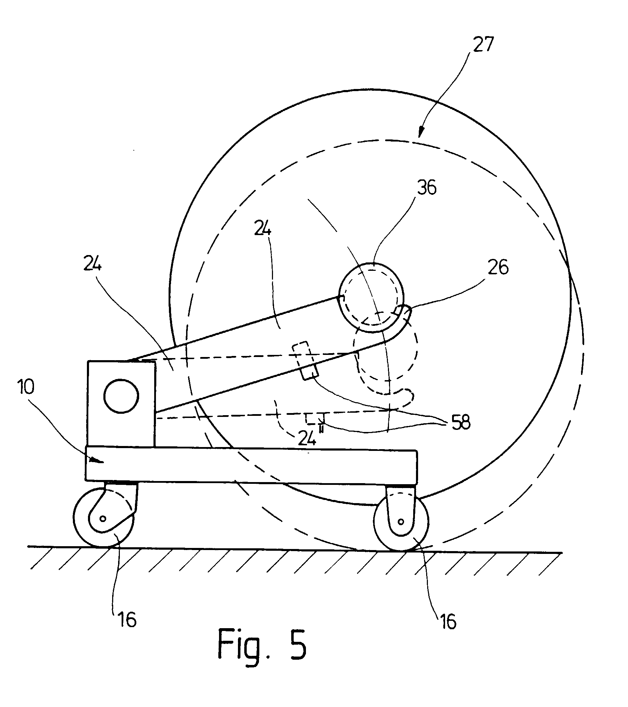

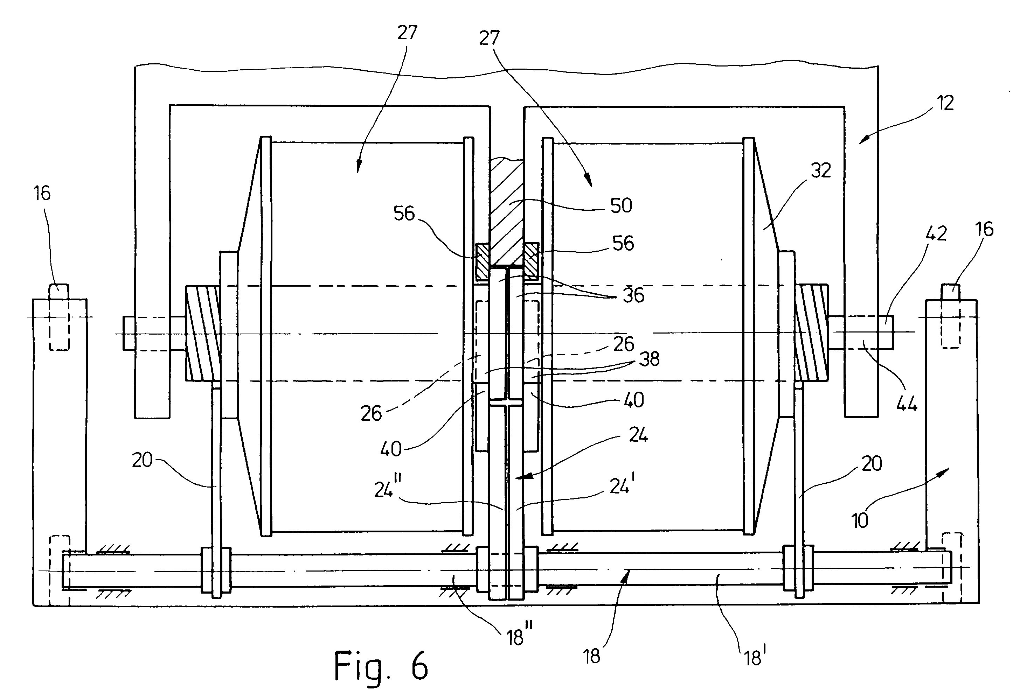

Bei den in den Fig. 4 bis 6 gezeigten Ausführungsbeispielen ist der Mitteltragarm 24 in zwei Tragarmhälften 24',24" längsgeteilt, von denen jede eine der beiden Tragklauen 26 trägt. Die Tragarmhälften 24',24" sind jeweils gemeinsam mit dem benachbarten Außentragarm 20 betätigbar, so daß die Halbkettbäume 27 einzeln vom Boden oder von einem Gestell aufgenommen werden können (vgl. Fig. 4 und 5). Andererseits sind die Tragarmhälften 24',24" mit geeigneten Kupplungsorganen 58 miteinander kuppelbar, so daß ein paarweises Einlegen und Entnehmen der Halbkettbäume 27 in die Webmaschine bzw. aus dieser möglich ist. Die getrennte Betätigung der Tragarmhälften 24',24" kann entweder dadurch erfolgen, daß die Tragarmhälften und die zugehörigen Außentragarmen 20 getrennt voneinander mit der gemeinsamen Hubwelle 18 kuppelbar und von dieser entkuppelbar sind (Fig. 4 und 5). Andererseits ist es möglich, die Tragarmhälften 24',24" auf getrennten Hubwellenteilen 18',18" anzuordnen (Fig. 6), die wahlweise miteinander kuppelbar sind und von denen eine oder beide antreibbar sind.

Bei dem in Fig. 7 gezeigten Ausführungsbeispiel weist der Kettbaumhub- und transportwagen 10 nur zwei seitliche Tragarme 124 auf, die zur Aufnahme eines Halbkettbaums 27 bestimmt sind. Die Tragarme 124 weisen eine Tragklaue 126 auf, die so schmal ausgebildet ist, daß sie von unten her in die Umfangsnut 40 des einen bzw. anderen Halbkettbaums 27 einführbar ist und daß sie sich außerdem als Rohrgreifer eignet. Dadurch ist sichergestellt, daß ein und derselbe Kettbaumhubwagen sowohl für den linken als auch für den rechten Halbkettbaum 27 eingesetzt werden kann.

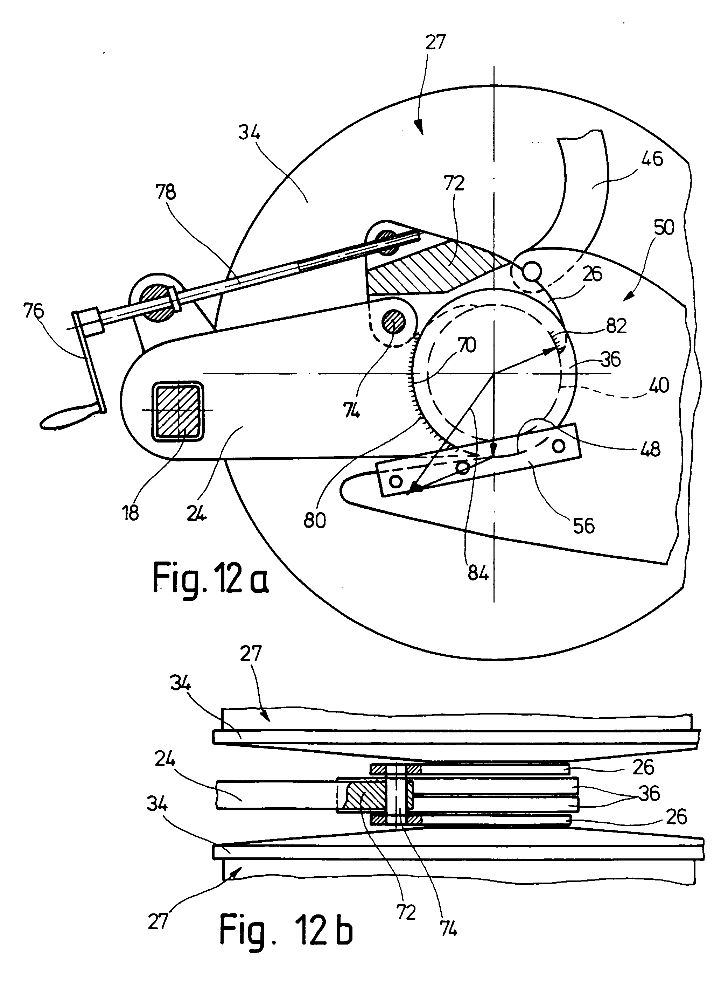

Bei dem Ausführungsbeispiel nach Fig. 12a und b weist der Mitteltragarm 24 des Kettbaumhub- und Transportwagens eine stirnseitige Mulde 70 auf, die in ihrer Krümmung der Umfangskrümmung der Laufringe 36 angepaßt ist und diese in der Einlege- und Entnahmeposition teilweise umfaßt. Weiter ist im oberen stirnseitigen Bereich des Mitteltragarms 24 ein Schwenkarm 72 an einem Gelenk 74 angelenkt und mittels einer durch eine Kurbel 76 drehbaren Gewindestange 78 um die Achse 74 verschwenkbar. Am Schwenkarm 72 stehen zwei in seitlichem Abstand voneinander angeordnete Tragklauen 26 stirnseitig über, die beim Verschwenken des Schwenkarms 72 in die Umfangsnut 40 zwischen den einander benachbarten Laufringen 36 und Festscheiben 34 ein und erzeugen auf diese Weise an den einander gegenüberliegenden Halteflächen 80, 82 eine Haltekraft 84, die ein paarweises Einlegen und Entnehmen der Halbkettbäume in das bzw. aus dem Webmaschinenlager 48 ermöglicht. Die Führungsschiene 56, die im eingelegten Zustand ebenfalls in die Umfangsnut 40 eingreift, stellt hierbei kein Hindernis für den Mitteltragarm 24 dar.

Zusammenfassend ist folgendes festzustellen: Die Erfindung bezieht sich auf eine Vorrichtung zum Einlegen und Entnehmen von Halbkettbäumen in ein bzw. aus einem Kettbaumlager einer Webmaschine mit einem mindestens zwei Tragarme 20,24 aufweisenden Kettbaumhub- und transportwagen 10. Um die Halbkettbäume 27 sowohl einzeln als auch paarweise einfach und zügig in das Kettbaumlager der Webmaschine einlegen und aus diesen entnehmen zu können, wird gemäß der Erfindung vorgeschlagen, daß in einem bei eingelegten Halbkettbäumen 27 axial über eine mittige Lagerschale überstehenden Bereich der Halbkettbäume eine Umfangsnut 40 angeordnet ist und daß der Kettbaumhubwagen 10 einen Mitteltragarm 24 aufweist, der zwei an der Lagerschale 48 vorbei von unten her in die Umfangsnuten 40 bis zum Nutengrund 38 einführbare, einen Abstand voneinander aufweisende Tragklauen 26 aufweist.

## Patentansprüche

1. Anordnung zum Einlegen und Entnehmen von Halbkettbäumen (27) in ein bzw. aus einem Kettbaumlager (44,48) einer Webmaschine (12) mittels eines mindestens zwei Tragarme (20,24) aufweisenden Kettbaumhub- und transportwagens (10), wobei die Halbkettbäume (27) an ihrem einen stirnseitigen Ende eine Festscheibe (34) und einen auf der Außenseite der Festscheibe (34) axial überstehenden und starr mit dieser verbundenen Laufring (36) tragen und das Kettbaumlager eine durch eine Randöffnung radial seitlich und/oder von oben her für die auf den Tragarmen (20,24) befindlichen Halbkettbäume (27) zugängliche, durch einen vorzugsweise schwenkbaren Lagerdeckel (46) verschließbare Lagerschale (48) zur paarweisen Aufnahme der einander zugewandten Laufringe (36) zweier Halbkettbäume (27) aufweist, **dadurch gekennzeichnet,** daß in einem bei eingelegten Halbkettbäumen (27) axial über die Lagerschale (48) überstehenden Bereich zwischen Laufring (36) und Festscheibe (34) der Halbkettbäume (27) jeweils eine zum Laufring koaxiale Stützfläche (40) angeordnet ist, und daß zumindest einer der Tragarme (24) mindestens eine stirnseitige, an der Lagerschale (48) vorbei von unten her an der Stützfläche (40) abstützbare Tragklaue (26) aufweist.

2. Anordnung zum Einlegen und Entnehmen von Halbkettbäumen (27) in ein bzw. aus einem Kettbaumlager (44,48) einer Webmaschine (12) mittels eines mindestens zwei Tragarme (20,24) aufweisenden Kettbaumhub- und transportwagens (10), wobei die Halbkettbäume (27) an ihrem einen stirnseitigen Ende eine Festscheibe (34) und einen auf der Außenseite der Festscheibe (34) axial überstehenden und starr mit dieser verbundenen Laufring (36) tragen und das Kettbaumlager eine durch eine Randöffnung radial seitlich und/oder von oben her für die auf den Tragarmen (20,24) befindlichen Halbkettbäume (27) zugängliche, durch einen vorzugsweise schwenkbaren Lagerdeckel (46) verschließbare Lagerschale (48) zur paarweisen Aufnahme der einander zugewandten Laufringe (36) zweier Halbkettbäume (27) aufweist, **dadurch gekennzeichnet,** daß in einem bei eingelegten Halbkettbäumen (27) axial über die Lagerschale (48) überstehenden Bereich zwischen Laufring (36) und Festscheibe (34) der Halbkettbäume (27) jeweils eine zum Laufring koaxiale Stützfläche (40) angeordnet ist, und daß der Tragarm (24) eine bis in die Nähe der Lagerschale (48) reichende, mindestens einen der Laufringe (36) teilweise in Umfangsrichtung umfassende Tragmulde (70) sowie mindestens eine axial gegenüber der Tragmulde (70) versetzte, an dem benachbarten Laufring (36) vorbei von oben her gegen die Stützfläche (40) unter Andrücken des Laufrings (36) gegen die Tragmulde (70) verschieb- oder verschwenkbare Tragklaue (26) aufweist.

3. Anordnung nach Anspruch 1 oder 2, **dadurch gekenn** **zeichnet,** daß einer der Tragarme (24), vorzugsweise ein Mitteltragarm (24), zwei mindestens einen der Querabmessung der Lagerschale (48) oder der beiden Laufringe (36) entsprechenden lichten Abstand voneinander aufweisende, an den Stützflächen der beiden Halbkettbäume (27) abstützbare vorzugsweise in je eine dort befindliche Umfangsnut (40) einführbare Tragklauen (26) aufweist.

4. Anordnung nach den Ansprüchen 1 und 3, **dadurch gekennzeichnet,** daß die Tragklauen (26) an einem gemeinsamen Mitteltragarm (24) starr angeordnet sind.

5. Anordnung nach den Ansprüchen 2 und 3, **dadurch gekennzeichnet,** daß die Tragklauen (26) an einem gemeinsamen, am Tragarm (24) angelenkten Schwenkarm (72) stirnseitig überstehen.

6. Anordnung nach Anspruch 5, **dadurch gekennzeichnet**, daß die Tragklauen (26) mittels eines am Tragarm (24) angeordneten, vorzugsweise als kurbelgetriebene Gewindestange (78) ausgebildeten Betätigungselements am Tragarm (24) verschwenkbar sind.

7. Anordnung nach einem der Ansprüche 1 bis 3, **dadurch gekennzeichnet,** daß der Tragarm (24) zwei längsgeteilte, getrennt bewegbare und miteinander kuppelbare, je eine der Tragklauen (26) aufweisende Tragarmhälften (24',24") aufweist.

8. Anordnung nach Anspruch 7, **dadurch gekennzeichnet,** daß die Tragarmhälften (24',24") auf einer gemeinsamen Hubwelle (18) angeordnet sind, wobei mindestens eine der beiden Tragarmhälften (24', 24") unabhängig von der anderen mit der Hubwelle (18) kuppelbar und von dieser entkuppelbar ist.

9. Anordnung nach Anspruch 7, **gekennzeichnet durch** zwei getrennt betätigbare Hubwellen (18',18"), die je eine der Tragarmhälften (24',24") tragen.

10. Anordnung nach einem der Ansprüche 1 bis 9, **dadurch gekennzeichnet,** daß die Stützfläche seitlich unter Bildung einer Umfangsnut durch den Laufring (36) und die Festscheibe (34) begrenzt ist und die Tragklaue bis zum Nutengrund in die Umfangsnut einführbar ist.

11. Anordnung nach einem der Ansprüche 1 bis 10, **dadurch gekennzeichnet**, daß die Stützfläche durch den Umfang eines mit dem Laufring vorzugsweise einstückig verbundenen koaxialen Stufenansatzes (38, 66) gebildet ist.

12. Anordnung nach einem der Ansprüche 10 oder 11, **dadurch gekennzeichnet,** daß die Stirnflächen eines die Lagerschale (48) enthaltenden Maschinenauslegers (50) außerhalb des Abstützbereichs der Tragklauen (26) mit je einer bei eingelegten Halbkettbäumen (27) in deren Umfangsnut (40) eingreifenden Führungsleiste (56) bestückt sind.

13. Anordnung nach Anspruch 12, **dadurch gekennzeichnet,** daß die Führungsleisten (56) im wesentlichen vertikal am Maschinenausleger (50) angeordnet sind.

14. Anordnung nach einem der Ansprüche 1 bis 13, **dadurch gekennzeichnet,** daß die Tragklauen (26) eine der konvexen Krümmung der Stützfläche (38) entsprechende konkave Innenkrümmung aufweisen.

15. Anordnung nach Anspruch 14, **dadurch gekennzeichnet**, daß Tragklauen (26) mit unterschiedlicher Innenkrümmung austauschbar am Tragarm (24) angeordnet sind.

16. Anordnung nach einem der Ansprüche 11 bis 15, **dadurch gekennzeichnet,** daß die Laufringe (36) und der Stufenansatz (66) einen die Lagerschale (48) an ihren Seitenflanken (60) teilweise führend übergreifenden Stufenring (64) bilden.

17. Anordnung nach einem der Ansprüche 1 bis 16, **dadurch gekennzeichnet,** daß die Laufringe (36) einen kugelgelagerten Umfangsring (62) tragen.

## Claims

1. An arrangement for inserting and removing of half-loom beams (27) into or out of a loom-beam bearing (44, 48) of a weaving machine (12) by means of a loom-beam lifting and transporting carriage (10) having at least two bearing arms (20, 24), whereby the half-loom beams (27) have at their one front-side end a fixed plate (34) and a disk (26) axially projecting on the outside of the fixed plate (34) and rigidly connected to same, and the loom-beam bearing has a bearing shell (48) to receive in pairs the disks (36) of two half-loom beams (27) which disks face one another, and which bearing shell can be closed off by a preferably pivotable bearing lid (46) and is accessible radially laterally and/or from above through an edge opening for the half-loom beams (27) provided on the bearing arms (20, 24), characterised in that a bearing surface (40) coaxial with respect to the disk is arranged in an area between the disk (36) and the fixed plate (34) of the half-loom beams (27), which area projects axially over the bearing shell (48) when the half-loom beams (27) are inserted in said loom-beam bearing, and that at least one of the bearing arms (24) has at least one bearing claw (26) which is positioned at the front end of the bearing arm, said bearing claw being adapted to extend past said bearing shell (48) and to support from below said bearing surface (40).

2. An arrangement for inserting and removing of half-loom beams (27) into or out of a loom-beam bearing (44, 48) of a weaving machine (12) by means of a loom-beam lifting and transporting carriage (10) having at least two bearing arms (20, 24), whereby the half-loom beams (27) have at their one front-side end a fixed plate (34) and a disk (26) axially projecting on the outside of the fixed plate (34) and rigidly connected to same, and the loom-beam bearing has a bearing shell (48) to receive in pairs the disks (36) of two half-loom beams (27) which disks face one another, and which bearing shell can be closed off by a preferably pivotable bearing lid (46) and is accessible radially laterally and/or from above through an edge opening for the half-loom beams (27) provided on the bearing arms (20, 24), characterised in that a bearing surface (40) coaxial with respect to the disk is arranged in an area between the disk (36) and the fixed plate (34) of the half-loom beams (27), which area projects axially over the bearing shell (48) when the half-loom beams (27) are inserted in said loom-beam bearing, and that the bearing arm (24) has a bearing depression (70) reaching into the proximity of the bearing shell (48) and partially encompassing at least one of the disks (36) in a circumferential direction, and at least one bearing claw (26) being axially offset with respect to the bearing depression (70) and being adapted to be displaced or pivoted from above past the adjacent disk (36) against the bearing surface (40), pressing the disk (36) against the bearing depression (70).

3. The arrangement according to Claim 1 or 2, characterised in that one of the bearing arms (24), preferably a centre bearing arm (24), has two bearing claws (26) spaced from one another at a minimum inside distance corresponding with the cross dimension of the bearing shell (48) or the two disks (36), and being supported on the bearing surfaces of the two half-loom beams (27), and can be inserted preferably into each one circumferential groove (40) provided thereon.

4. The arrangement according to Claims 1 and 3, characterised in that the bearing claws (26) are rigidly arranged on a common centre bearing arm (24).

5. The arrangement according to Claims 2 and 3, characterised in that the bearing claws (26) project over the front side of a common swivel arm (72) pivotally connected to the bearing arm (24).

6. The arrangement according to Claim 5, characterised in that the bearing claws (26) are pivotal on the bearing arm (24) by means of an operating element arranged on the bearing arm (24) and preferably designed as a crank-driven threaded rod (78).

7. The arrangement according to one of the Claims 1 to 3, characterised in that the bearing arm (24) has two longitudinally divided, separately movable bearing-arm halves (24', 24") which can be coupled with one another and each having one of the bearing claws (26).

8. The arrangement according to Claim 7, characterised in that the bearing-arm halves (24', 24") are arranged on a common lifting shaft (18), whereby at least one of the two bearing-arm halves (24', 24") can be coupled independently of the other with the lifting shaft (18) and can be uncoupled from same.

9. The arrangement according to Claim 7, characterised by two separately operable lifting shafts (18', 18"), each of which carries one of the bearing-arm halves (24', 24").

10. The arrangement according to one of the Claims 1 to 9, characterised in that the bearing surface is defined laterally by forming a circumferential groove through the disk (36) and the fixed plate (34), and the bearing claw can be inserted into the circumferential groove up to its base.

11. The arrangement according to one of the Claims 1 to 10, characterised in that the bearing surface is formed by the circumference of a coaxial step shoulder (38), preferably connected in one piece to the disk.

12. The arrangement according to one of the Claims 10 or 11, characterised in that the front surfaces of a machine bracket (50) containing the bearing shell (48) are equipped outside of the bearing area of the bearing claws (26) with a guide rod engaging, with the half-loom beams (27) inserted, its circumferential groove (40).

13. The arrangement according to Claim 12, characterised in that the guide bars are arranged essentially vertically on the machine bracket.

14. The arrangement according to one of the Claims 1 to 13, characterised in that the bearing claws (26) have a concave inner curvature corresponding with the convex curvature of the bearing surface (38).

15. The arrangement according to Claim 14, characterised in that the bearing claws (26) are with different inner curvature arranged exchangeably on the bearing arm (24).

16. The arrangement according to one of the Claims 11 to 15, characterised in that the disks (36) and the step shoulder (66) form a step ring (64) gripping partially guidingly over the bearing shell (48) at its side flanks (60).

17. The arrangement according to one of the Claims 1 to 16, characterised in that the disks (36) carry a ball-bearing supported circumferential ring (62).

## Revendications

1. Dispositif pour l'introduction de demi-ensouples (27) dans un support d'ensouple (44, 48) d'un métier à tisser (12) et leur enlèvement à partir de celui-ci au moyen d'un chariot d'élévation et de transport d'ensouple (10) présentant au moins deux bras de support (20, 24), les demi-ensouples (27) portant, à une de leurs extrémités du côté frontal, un disque fixe (34) et une bague de roulement (36) qui fait saillie axialement du côté extérieur du disque fixe (34) et est reliée de manière rigide à ce dernier, le support d'ensouple présentant une coque de palier (48) qui, par une ouverture de bord, est accessible radialement latéralement et/ou à partir du haut pour les demi-ensouples (27) situées sur les bras de support (20, 24), peut être fermée par un couvercle de palier (46) de préférence capable de pivoter et est destinée à recevoir par paire les bagues de roulement (36) mutuellement adjacentes de deux demi-ensouples (27), caractérisé en ce qu'une surface de soutien (40) coaxiale à la bague de roulement est disposée dans une zone qui est axialement en ressaut au-delà de la coque de palier (48), lorsque les demi-ensouples (27) sont introduites, et qui est située entre une bague de roulement (36) et un disque fixe (34) et en ce qu'au moins un des bras de support (24) présente au moins une griffe de support (26) du côté frontal qui peut être appuyée à partir du bas sur la surface de soutien (40), en passant devant la coque de palier (48).

2. Dispositif pour l'introduction de demi-ensouples (27) dans un support d'ensouple (44, 48) d'un métier à tisser (12) et pour leur enlèvement à partir de celui-ci au moyen d'un chariot d'élévation et de transport d'ensouple (10) présentant au moins deux bras de support (20, 24), les demi-ensouples (27) portant à une de leurs extrémités du côté frontal un disque fixe (34) et une bague de roulement (36) qui fait saillie axialement du côté extérieur du disque fixe (34) et est reliée à ce dernier de manière rigide, le support d'ensouple présentant une coque de palier (48), qui, par une ouverture de bord, est accessible radialement latéralement et/ou à partir du haut pour les demi-ensouples (27) situées sur les bras de support (20, 24), peut être fermée par un couvercle de palier (46) de préférence capable de pivoter et est destinée à recevoir par paire les bagues de roulement (36) mutuellement adjacentes de deux demi-ensouples (27), caractérisé en ce qu'une surface de soutien (40) coaxiale à la bague de roulement est disposée dans une zone qui est en saillie axialement par rapport à la coque de palier (48), lorsque les demi-ensouples (27) sont introduites, et qui est située entre une bague de roulement (36) et un disque fixe (34) des demi-ensouples (27) et en ce que le bras de support (24) présente une cuvette de support (70) qui va jusqu'à proximité de la coque de palier (48) et entoure partiellement en sens périphérique au moins une des bagues de roulement (36), ainsi qu'au moins une griffe de support (26) qui est décalée axialement par rapport à la cuve de support (70), et peut être déplacée ou amenée à pivoter à partir du haut en passant devant la bague de roulement voisine (36) contre la surface de soutien (40), avec application de la bague de roulement (36) contre la cuve de support (70).

3. Dispositif suivant l'une des revendications 1 et 2, caractérisé en ce qu'un des bras de support (24), de préférence un bras de support central (24), présente deux griffes de support (26) qui présentent au moins un espace libre entre elles correspondant à la dimension transversale de la coque de palier (48) ou des deux bagues de roulement (36), peuvent être appuyées sur les surfaces de soutien des deux demi-ensouples (27), et peuvent de préférence chacune être introduites dans une rainure périphérique (40) située là.

4. Dispositif suivant l'une des revendications 1 et 3, caractérisé en ce que les griffes de support (26) sont agencées de manière rigide sur un bras de support central commun (24).

5. Dispositif suivant l'une des revendications 2 et 3, caractérisé en ce que les griffes de support (26) font saillie du côté frontal sur un bras pivotant (72) commun qui est articulé sur le bras de support (24).

6. Dispositif suivant la revendication 5, caractérisé en ce que les griffes de support (26) sont capables de pivoter sur le bras de support (24) au moyen d'un élément d'actionnement qui est agencé sur le bras de support (24) et qui est de préférence réalisé sous la forme d'une tige filetée (78) actionnée par manivelle.

7. Dispositif suivant l'une des revendications 1 à 3, caractérisé en ce que le bras de support (24) présente deux moitiés de bras de support (24', 24") qui sont divisées longitudinalement, peuvent être déplacées séparément et couplées l'une à l'autre et qui présentent chacune une des griffes de support (26).

8. Dispositif suivant la revendication 7, caractérisé en ce que les moitiés de bras de support (24', 24") sont agencées sur un arbre de levage commun (18), au moins une des deux moitiés de bras de support (24', 24") pouvant être couplée à l'arbre de levage (18) et désaccouplée de ce dernier, indépendamment de l'autre moitié.

9. Dispositif suivant la revendication 7, caractérisé par deux arbres de levage séparément actionnables (18', 18") qui chacun portent une des moitiés de bras de support (24', 24").

10. Dispositif suivant l'une des revendications 1 à 9, caractérisé en ce que la surface de soutien est délimitée latéralement par la bague de roulement (36) et le disque fixe (34) avec formation d'une rainure périphérique et en ce que la griffe de support peut être introduite dans la rainure périphérique jusqu'au fond de rainure.

11. Dispositif suivant l'une des revendications 1 à 10, caractérisé en ce que la surface de soutien est formée par la périphérie d'une saillie en gradin (38, 66) coaxiale, qui est reliée à la bague de roulement, de préférence d'une pièce.

12. Dispositif suivant l'une des revendications 10 et 11, caractérisé en ce que les surfaces frontales d'une console du métier (50) comportant la coque de palier (48) sont équipées, à l'extérieur de la zone d'appui des griffes de support (26), chaque fois d'une nervure de guidage (56) qui pénètre dans la rainure périphérique (40) des demi-ensouples (27), lorsque celles-ci sont introduites.

13. Dispositif suivant la revendication 12, caractérisé en ce que les nervures de guidage (56) sont disposées sensiblement verticalement sur la console du métier (50).

14. Dispositif suivant l'une des revendications 1 à 13, caractérisé en ce que les griffes de support (26) présentent une courbure interne concave qui correspond à la courbure convexe de la surface de soutien (38).

15. Dispositif suivant la revendication 14, caractérisé en ce que des griffes de support (26) à courbures internes différentes sont agencées de manière échangeable sur le bras de support (24).

16. Dispositif suivant l'une des revendications 11 à 15, caractérisé en ce que les bagues de roulement (36) et la saillie en gradin (66) forment un anneau en gradin (64) qui recouvre partiellement, de façon à guider, la coque de palier (48) sur ses flancs latéraux (60).

17. Dispositif suivant l'une des revendications 1 à 16, caractérisé en ce que les bagues de roulement (36) portent un anneau périphérique (62) monté sur roulement à billes.
